# EUROPÄISCHE PATENTSCHRIFT

(11) **EP 3 665 872 B1**
(45) Veröffentlichungstag und Bekanntmachung des Hinweises auf die Patenterteilung: **06.10.2021**
(21) Anmeldenummer: 18749366.3
(22) Anmeldetag: 01.08.2018
(51) Int. Cl.: H04L 12/40

(54) **SCHWINGUNGSREDUKTIONSEINHEIT FÜR EIN BUSSYSTEM UND VERFAHREN ZUR REDUZIERUNG EINER SCHWINGNEIGUNG BEIM ÜBERGANG ZWISCHEN UNTERSCHIEDLICHEN BITZUSTÄNDEN**
OSCILLATION REDUCTION UNIT FOR A BUS SYSTEM, AND METHOD FOR REDUCING AN OSCILLATION INCLINATION WHEN TRANSITIONING BETWEEN DIFFERENT BIT STATES
UNITÉ DE RÉDUCTION D'OSCILLATION POUR SYSTÈME DE BUS ET PROCÉDÉ DE RÉDUCTION DE LA TENDANCE À OSCILLER LORS DE LA TRANSITION ENTRE DIFFÉRENTES ÉTATS BINAIRES

(30) Priorität: 08.08.2017 DE 102017213835
(43) Veröffentlichungstag der Anmeldung: 17.06.2020
(73) Patentinhaber: Robert Bosch GmbH, 70442 Stuttgart (DE)
(72) Erfinder: PANNWITZ, Axel, 01445 Radebeul (DE); WALKER, Steffen, 72770 Reutlingen (DE); BRANDO, Cyrille, 72654 Neckartenzlingen (DE)
(86) Internationale Anmeldenummer: PCT/EP2018/070911
(87) Internationale Veröffentlichungsnummer: WO 2019/030082

(56) Entgegenhaltungen:
- DE-A1-102013 222 786
- DE-A1-102014 204 048
- DE-A1-102014 209 694
- DE-A1-102014 215 469

## Beschreibung

Die vorliegende Erfindung betrifft eine Schwingungsreduktionseinheit für ein Bussystem und ein Verfahren zur Reduzierung einer Schwingneigung beim Übergang zwischen unterschiedlichen Bitzuständen, welche beispielsweise bei einer Teilnehmerstation für ein CAN-Bussystem zum Einsatz kommen können. Die Reduzierung der Schwingneigung wird durch eine Schaltung erzielt, die beispielsweise an ein herkömmliches CAN-Sende/Empfangseinrichtung-Frontend oder ein herkömmliches CAN-FD-Sende/Empfangseinrichtung-Frontend angeschlossen ist.

### Stand der Technik

Bei einer Nachrichten- oder Datenübertragung in einem Bussystem werden Informationen, die in Bytes bzw. Bits der Nachrichten oder Daten enthalten sind, durch unterschiedliche Bitzustände oder Spannungszustände dargestellt. Die unterschiedlichen Bitzustände haben beim Übertragen der Nachricht über einen Bus des Bussystems unterschiedliche Buszustände zur Folge. Je nach Bussystem existieren für Nachrichten- oder Datenübertragung verschiedene Übertragungsprotokolle.

Beispielsweise werden beim CAN-Bussystem Nachrichten mittels des CAN- und/oder CAN FD Protokolls übertragen, wie es im Standard ISO-11898-1:2015 als CAN Protokoll-Spezifikation mit CAN FD beschrieben ist. Das CAN-Bussystem ist heute für die Kommunikation zwischen Sensoren und Steuergeräten weit verbreitet. Oft wird das CAN-Bussystem in Fahrzeugen oder Automatisierungsanlagen, usw. für eine Kommunikation zwischen den einzelnen Busteilnehmern eingesetzt.

Insbesondere bei der CAN/CAN-FD-Kommunikation müssen die Sende-/Empfangseinrichtungen, die auch Transceiver genannt werden, in der Lage sein, den Bus niederohmig treiben zu können, um einen dominanten Buszustand oder Bitzustand als einen der beiden verschiedenen Buszustände oder Bitzustände herzustellen. Im Rezessivzustand als dem anderen der beiden verschiedenen Buszustände dagegen sind die Sende-/Empfangseinrichtungen verhältnismäßig hochohmig.

Der Übergang von Dominant nach Rezessiv ist je nach Bustopologie, Länge der Stubs bzw. Stich leitungen, Position und Anzahl der Terminationswiderstände mit einer Schwingneigung behaftet. Dies ist sehr unvorteilhaft bei der Systemauslegung, weil infolgedessen die Bitzeit so lang sein muss, bis die Schwingung ausreichend bedämpft ist. Ist die Bitzeit nicht lang genug, kann die Sende-/Empfangseinrichtung im Rezessivzustand fälschlicherweise ein Dominant erkennen. Daher bedingt eine Einhaltung der maximal zulässigen Fehlerquote der Sende-/Empfangseinrichtung eine längere Bitzeit, was eine unerwünschte Reduzierung der Übertragungsrate oder Übertragungsgeschwindigkeit der Nachrichten im Bussystem zur Folge hat.

Die Offenlegungsschrift DE 10 2014 204 048 A1 offenbart eine Sende-/ Empfangseinrichtung mit einer Emissionssteuereinrichtung zur Steuerung der Eigenschaften der Sende-/Empfangseinrichtung zur Reduktion von leitungsgebundenen Emissionen, wobei die Sende-/Empfangseinrichtung zum Ein- oder Ausschalten der Emissionssteuereinrichtung abhängig von der Arbitrierungsphase und des Datenbereichs der Nachricht ausgestaltet ist.

### Offenbarung der Erfindung

Daher ist es Aufgabe der vorliegenden Erfindung, eine Schwingungsreduktionseinheit für ein Bussystem und ein Verfahren zur Reduzierung einer Schwingneigung beim Übergang zwischen unterschiedlichen Bitzuständen bereitzustellen, welche die zuvor genannten Probleme lösen. Insbesondere sollen eine Schwingungsreduktionseinheit für ein Bussystem und ein Verfahren zur Reduzierung einer Schwingneigung beim Übergang zwischen unterschiedlichen Bitzuständen oder Spannungszuständen, insbesondere einer Schwingneigung beim Übergang vom dominanten zum rezessiven Zustand, in einem Bussystem bereitgestellt werden.

Die Aufgabe wird durch eine Schwingungsreduktionseinheit für ein Bussystem mit den Merkmalen von Anspruch 1 gelöst. Die Schwingungsreduktionseinheit umfasst zwei Transistoren, die antiseriell zwischen einer ersten Busader eines Busses des Bussystems und einer zweiter Busader des Busses angeordnet sind, bei welchem Bussystem zumindest zeitweise ein exklusiver, kollisionsfreier Zugriff einer Teilnehmerstation auf den Bus des Bussystems gewährleistet ist, und einem Zeitsteuerblock zum Schalten der zwei Transistoren, wobei der Zeitsteuerblock ausgestaltet ist, die zwei Transistoren einzuschalten, während ein Signal auf der ersten und/oder zweiten Busader und/oder ein Sendesignal, aus dem die Signale auf der ersten und/oder zweiten Busader erzeugt werden, von einem dominanten Zustand zu einem rezessiven Zustand wechselt, und wobei der Zeitsteuerblock ausgestaltet ist, die zwei Transistoren auszuschalten, wenn das Signal auf der ersten und/oder zweiten Busader und/oder das Sendesignal, in den rezessiven Zustand geschaltet sind/ist.

Mit der beschriebenen Schwingungsreduktionseinheit ist eine Reduzierung der Schwingdauer oder ein sogenanntes Ringing Suppression beim Übergang von Dominant nach Rezessiv möglich, woraus eine Erhöhung der Bitraten folgt, insbesondere im Datenbereich einer Nachricht. Als Folge davon steigt die Übertragungsrate oder Übertragungsgeschwindigkeit der Nachrichten im Bussystem.

Zudem erlaubt eine Reduzierung der Schwingdauer beim Übergang zwischen unterschiedlichen Bitzuständen oder Spannungszuständen, insbesondere beim CAN-Bussystem von Dominant nach Rezessiv, mehr Freiheit bei der Auslegung von Bustopologien und/oder von Abschlüssen und/oder von Stubs und/oder von der Anzahl der Knoten bzw. Teilnehmerstationen des Bussystems.

Noch dazu wird durch die beschriebene Ausgestaltung der Schwingungsreduktionseinheit eine vorteilhafte Veränderung des Spektrums bei leitungsgebundener Emission erzielt. Die Abstrahlung von Emissionen kann nämlich im kritischen Frequenzbereich verringert werden, der beispielsweise zwischen ein und drei MHz liegt, was der Resonanzfrequenz aus Gleichtaktdrossel und parasitären Kapazitäten entspricht. Stattdessen tritt durch die beschriebene Schwingungsreduktionseinheit die Abstrahlung von Emissionen in dem unkritischen Frequenzbereich auf, der bei dem genannten Beispiel bei Frequenzen größer als 10MHz liegt, und bei dem die Drossel wirkt.

Darüber hinaus wird eine sehr symmetrische Impedanz der beiden Busadern des Busses durch die hinzugefügten Treiber geschaffen. Bei der beschriebenen Schwingungsreduktionseinheit sind an jeder Busader nun die gleichen Elemente angeschlossen. Dadurch wird die Störfestigkeit und Emission der Schwingungsreduktionseinheit und der Komponenten erhöht, die mit der Schwingungsreduktionseinheit verbunden sind.

Die Schwingungsreduktionseinheit ist für alle Kommunikationssysteme geeignet, bei welchen ein Buszustand aktiv getrieben wird, wie insbesondere bei einem CAN-Bussystem, einem CAN-HS-Bussystem, einem CAN-FD-Bussystem, usw. Bei einem CAN-HS-Bussystem (HS = Hochgeschwindigkeit = Highspeed) ist eine Datenübertragungsrate von bis zu 500 kBit pro Sekunde (500 kbps) möglich. Bei einem CAN FD-Bussystem ist eine Datenübertragungsrate von größer 1 MBit pro Sekunde (1Mbps) möglich.

Vorteilhafte weitere Ausgestaltungen der Schwingungsreduktionseinheit sind in den abhängigen Ansprüchen beschrieben.

Gemäß einer Ausgestaltung kann die Schwingungsreduktionseinheit ausgestaltet sein, einen Einschaltstrom gegen Masse beim Einschalten der Transistoren mit einem Strom von einem Anschluss für eine Spannungsversorgung zu kompensieren. Hierbei sind die Transistoren möglicherweise PMOS-Hochvolt-Kaskoden.

Die Schwingungsreduktionseinheit kann einen weiteren Transistor aufweisen, dessen Drain-Anschluss an Source-Anschlüsse der zwei zwischen den Busadern antiseriell angeschlossenen Transistoren angeschlossen ist. Gemäß einem Ausführungsbeispiel hat die Schwingungsreduktionseinheit zudem eine Stromquelle zur Erzeugung einer Vorspannung für den weiteren Transistor, wobei der weitere Transistor gemäß der P-Substrat-Bulk-Technologie aufgebaut ist. Gemäß einem weiteren Ausführungsbeispiel ist der weitere Transistor gemäß der SOI-Technologie aufgebaut.

Die zuvor beschriebene Schwingungsreduktionseinheit kann Teil einer Teilnehmerstation für das Bussystem sein, wobei die Teilnehmerstation zudem eine Kommunikationssteuereinrichtung zum Steuern einer Kommunikation der Teilnehmerstation mit mindestens einer weiteren Teilnehmerstation des Bussystems, und eine Sende-/Empfangseinrichtung zum Senden von Nachrichten auf den Bus des Bussystems und zum Empfangen von Nachrichten von dem Bus aufweist.

Denkbar ist, dass entweder die Kommunikationssteuereinrichtung oder die Sende-/Empfangseinrichtung einen Block aufweist, welcher ausgestaltet ist, einen Zustandswechsel eines vom Bus empfangenen Signals von dem dominanten Buszustand zu dem rezessiven Buszustand zu erfassen, wobei die Schwingungsreduktionseinheit ausgestaltet ist, die zwei antiseriell zwischen den Busadern angeschlossenen Transistoren in Abhängigkeit von dem Erfassungsergebnis des Blocks ein- oder auszuschalten.

Gemäß einer speziellen Ausgestaltung ist es möglich, dass die Schwingungsreduktionseinheit nur aktiviert ist, wenn die Sende-/Empfangseinrichtung eine Nachricht auf den Bus sendet.

Die zuvor beschriebene Teilnehmerstation kann Teil eines Bussystems sein, das einen Bus, und mindestens zwei Teilnehmerstationen aufweist, welche über den Bus derart miteinander verbunden sind, dass sie miteinander kommunizieren können. Hierbei ist mindestens eine der Teilnehmerstationen eine zuvor beschriebene Teilnehmerstation.

Die zuvor genannte Aufgabe wird zudem durch ein Verfahren zur Reduzierung einer Schwingneigung beim Übergang zwischen unterschiedlichen Bitzuständen mit den Merkmalen von Anspruch 11 gelöst. Das Verfahren wird mit einer Schwingungsreduktionseinheit für ein Bussystem ausgeführt wird, bei welchem zumindest zeitweise ein exklusiver, kollisionsfreier Zugriff einer Teilnehmerstation auf einen Bus des Bussystems gewährleistet ist, wobei die Schwingungsreduktionseinheit zwei Transistoren aufweist, die antiseriell zwischen einer ersten und zweiten Busader eines Busses des Bussystems angeordnet sind, wobei das Verfahren die Schritte aufweist: Einschalten, mit einem Zeitsteuerblock, der zwei Transistoren, während ein Signal auf der ersten und/oder zweiten Busader und/oder ein Sendesignal, aus dem die Signale auf der ersten und/oder zweiten Busader erzeugt werden, von einem dominanten Zustand zu einem rezessiven Zustand wechselt, und Ausschalten, mit dem Zeitsteuerblock, der zwei Transistoren, wenn das Signal auf der ersten und/oder zweiten Busader und/oder das Sendesignal, in den rezessiven Zustand geschaltet ist.

Das Verfahren bietet dieselben Vorteile, wie sie zuvor in Bezug auf die Schwingungsreduktionseinheit genannt sind.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein elektrisches Schaltbild einer Sende-/Empfangseinrichtung mit einer Schwingungsreduktionseinheit des Bussystems gemäß dem ersten Ausführungsbeispiel;
Fig. 3A einen zeitlichen Verlauf eines Sendesignals TxD bei der Sende-/Empfangseinrichtung mit der Schwingungsreduktionseinheit gemäß dem ersten Ausführungsbeispiel sowie Fig. 3B einen zeitlichen Verlauf eines Sendesignals TxD bei einer herkömmlichen Sende-/Empfangseinrichtung;
Fig. 4A einen zeitlichen Verlauf der Bussignale CAN_H und CAN_L bei der Sende-/Empfangseinrichtung mit der Schwingungsreduktionseinheit gemäß dem ersten Ausführungsbeispiel sowie Fig. 4B einen zeitlichen Verlauf der Bussignale CAN_H und CAN_L bei der herkömmlichen Sende-/Empfangseinrichtung;
Fig. 5A einen zeitlichen Verlauf einer Differenzspannung VDIFF der Bussignale CAN_H und CAN_L bei der Sende-/Empfangseinrichtung mit der Schwingungsreduktionseinheit gemäß dem ersten Ausführungsbeispiel sowie Fig. 5B einen zeitlichen Verlauf der Differenzspannung VDIFF der Bussignale CAN_H und CAN_L bei der herkömmlichen Sende-/Empfangseinrichtung;
Fig. 6A einen zeitlichen Verlauf einer Empfängerausgabe bei der Sende-/Empfangseinrichtung mit der Schwingungsreduktionseinheit gemäß dem ersten Ausführungsbeispiel sowie Fig. 6B einen zeitlichen Verlauf einer Empfängerausgabe bei der herkömmlichen Sende-/Empfangseinrichtung;
Fig. 7A einen zeitlichen Verlauf eines Empfangssignals RxD bei der Sende-/Empfangseinrichtung mit der Schwingungsreduktionseinheit gemäß dem ersten Ausführungsbeispiel sowie Fig. 7B einen zeitlichen Verlauf eines Empfangssignals RxD bei einer herkömmlichen Sende-/Empfangseinrichtung;
Fig. 8 ein elektrisches Schaltbild der Schwingungsreduktionseinheit gemäß dem ersten Ausführungsbeispiel;
Fig. 9 ein elektrisches Schaltbild einer Schwingungsreduktionseinheit gemäß einem zweiten Ausführungsbeispiel; und
Fig. 10 ein elektrisches Schaltbild einer Schwingungsreduktionseinheit gemäß einem dritten Ausführungsbeispiel; und
Fig. 11 ein elektrisches Schaltbild einer Teilnehmerstation eines Bussystems gemäß einem vierten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

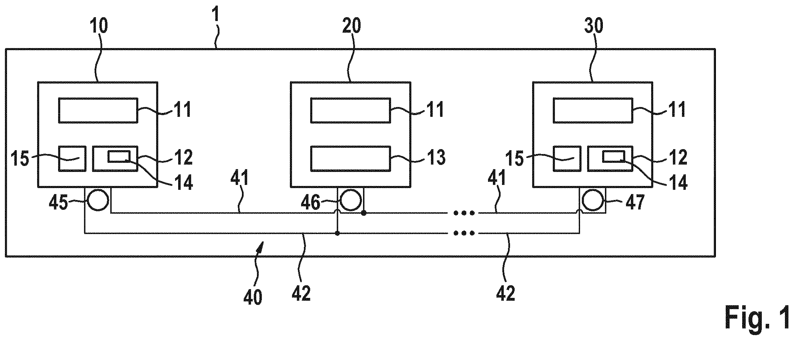

Fig. 1 zeigt ein Bussystem 1, das beispielsweise zumindest abschnittsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur Einkopplung der dominanten Pegel im Sendezustand. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11 und eine Sende-/Empfangseinrichtung 12. Die Sende-/Empfangseinrichtungen 12 umfassen jeweils eine Schwingungsreduktionseinheit 15. Die Teilnehmerstation 20 hat dagegen eine Kommunikationssteuereinrichtung 11 und eine Sende-/Empfangseinrichtung 13. Die Sende-/Empfangseinrichtungen 12 der Teilnehmerstationen 10, 30 und die Sende-/Empfangseinrichtung 13 der Teilnehmerstation 20 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Sende-/Empfangseinrichtung 12 dient zum Senden der Nachrichten 45, 47 in Form von Signalen und nutzt hierbei die Schwingungsreduktionseinheit 15, wie später noch ausführlicher beschrieben. Die Kommunikationssteuereinrichtung 11 kann insbesondere wie ein herkömmlicher CAN-FD-Controller und/oder CAN-Controller ausgeführt sein. Die Sende-/Empfangseinrichtung 13 kann insbesondere wie ein herkömmlicher CAN-Transceiver und/oder CAN-FD-Transceiver ausgeführt sein. Die Sende-/Empfangseinrichtung 13 kann insbesondere wie ein herkömmlicher CAN-Transceiver ausgeführt sein.

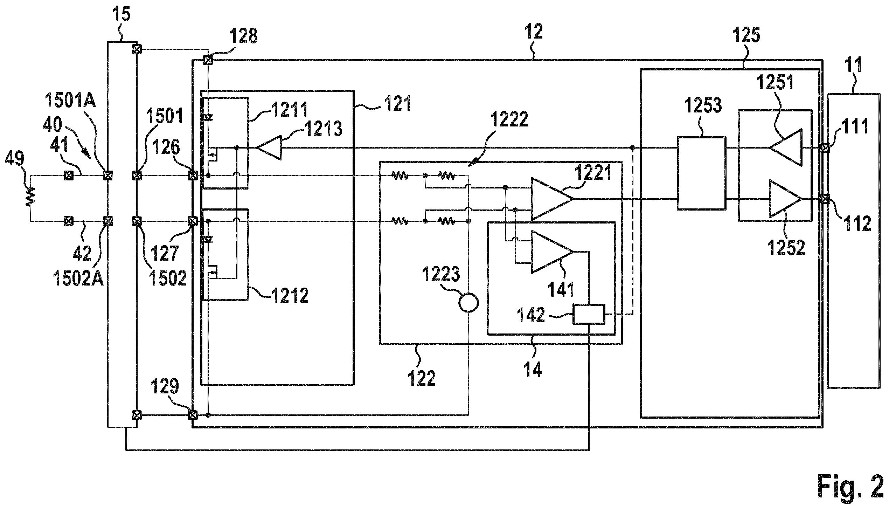

Fig. 2 zeigt den grundlegenden Aufbau der Sende-/Empfangseinrichtung 12 mit der Schwingungsreduktionseinheit 15. Die Sende-/Empfangseinrichtung 12 ist mittels Anschlüssen 126, 127 an den Bus 40, genauer gesagt dessen erste Busader 41 für CAN_H und dessen zweite Busader 42 für CAN_L angeschlossen. Die Schwingungsreduktionseinheit 15 ist mit Anschlüssen 1501, 1501A zwischen die Anschlüsse 41, 126 sowie mit Anschlüssen 1502, 1502A zwischen die Anschlüsse 42, 127 geschaltet. Die Anschlüsse 1501, 1501A können als nur ein Anschluss ausgestaltet sein. Die Anschlüsse 1502, 1502A können als nur ein Anschluss ausgestaltet sein. Die Spannungsversorgung, insbesondere CAN-Supply, für die erste und zweite Busader 41, 42 erfolgt über einen Anschluss 128. Der Anschluss an Masse bzw. CAN_GND ist über einen Anschluss 129 realisiert. Die erste und zweite Busader 41, 42 sind mit einem Abschlusswiderstand 49 terminiert.

Die erste und zweite Busader 41, 42 sind in der Sende-/Empfangseinrichtung 12 mit einem Sender 121, der auch als Transmitter bezeichnet wird, und mit einem Empfänger 122 verbunden, der auch als Receiver bezeichnet wird. Sowohl mit dem Sender 121 als auch dem Empfänger 122 ist eine Anschalteinheit 125 zum Treiben von Signalen über die Anschlüsse 111, 112 an die Kommunikationssteuereinrichtung 11 verbunden.

Zum Treiben der Signale der Anschlüsse 111, 112 hat die Anschalteinheit 125 einen Sendesignaltreiber 1251 für ein Sendesignal TxD, das auch als TxD-Signal bezeichnet wird und an dem Anschluss 111 von der Kommunikationssteuereinrichtung 11 empfangen wird. Zudem hat die Anschalteinheit 125 einen Empfangssignaltreiber 1252 für ein Empfangssignal RxD, das auch als RxD-Signal bezeichnet wird. Das Empfangssignal RxD wurde von den Busadern 41, 42 mittels des Empfängers 122 empfangen und wird über den Anschluss 112 an die Kommunikationssteuereinrichtung 11 weitergegeben. Die Treiber 1251, 1252 sind über ein Digitalteil 1253 mit dem Sender 121 und dem Empfänger 122 verbunden. Das Digitalteil 1253 kann eine Überwachung der Signale TxD, RxD durchführen.

Gemäß Fig. 2 hat der Sender 121 für Endstufen 1211, 1212 einen herkömmlichen Treiber 1213 für die Signale für die erste und zweite Busader 41, 42.

Der Empfänger 122 hat einen Empfangskomparator 1221, dessen Eingänge in einem resistiven, insbesondere symmetrischen, Spannungsteiler 1222, genauer gesagt dessen Mittelabgriff, verschaltet ist, und eine Busvorspannungseinheit 1223. Die Busvorspannungseinheit 1223 speist den resistiven Spannungsteiler 1222 an seinem einen Ende mit einer vorbestimmten Busvorspannung oder einem vorbestimmten Busvorspannungspotenzial. Der resistive Spannungsteiler 1222 ist an seinem anderen Ende über die Anschlüsse 126, 127 an die erste und zweite Busader 41, 42 angeschlossen.

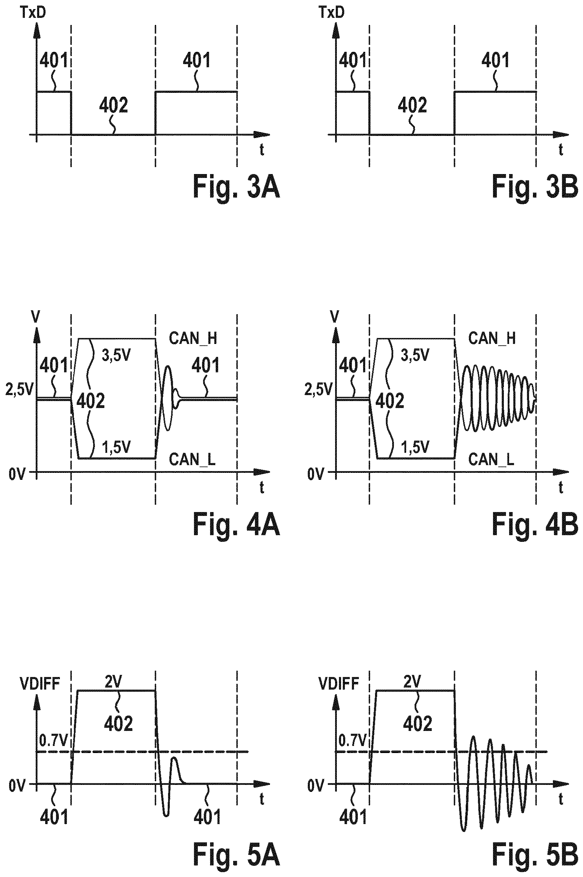

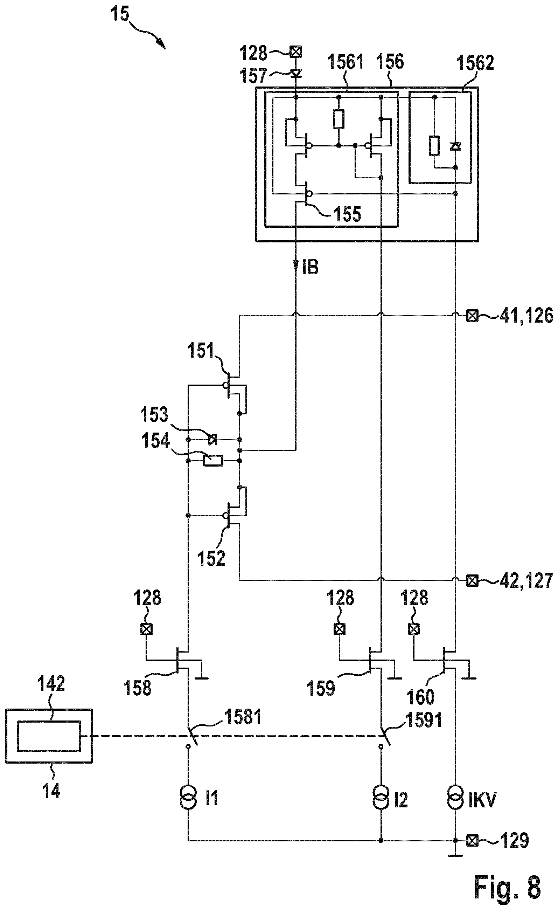

Die Anschalteinheit 14 umfasst einen Zustandswechsel-Erfassungsblock 141 und einen Zeitsteuerblock 142. Der Zustandswechsel-Erfassungsblock 141 erfasst im Betrieb der Sende-/Empfangseinrichtung 12, ob sich der Zustand des Signals CAN-H und des Signals CAN_L auf den Bus 40 von einem ersten Buszustand 401 zu einem zweiten Buszustand 402 ändert, die in Bezug auf Fig. 3A bis Fig. 7B noch genauer beschrieben sind. Der Zeitsteuerblock 142 gibt abhängig von dem Erfassungsergebnis des Zustandswechsel-Erfassungsblocks 141 Ansteuersignale an die Schwingungsreduktionseinheit 15 aus, welche in Bezug auf Fig. 8 genauer beschrieben ist. Optional wird der Schwingungsreduktionseinheit 15 das Sendesignal TxD über ein Zeitglied zugeführt, so dass die Ansteuerung der Schwingungsreduktionseinheit 15 aus dem TxD-Signal mittels Zeitglied erfolgt.

Fig. 3A bis Fig. 7A zeigen jeweils einen zeitlichen Verlauf von Signalen bei der Sende-/Empfangseinrichtung 12 gemäß dem vorliegenden Ausführungsbeispiel. Hierbei stellen sich in Folge eines in Fig. 3A gezeigten Sendesignals TxD die Signale gemäß Fig. 4A bis Fig. 7A ein.

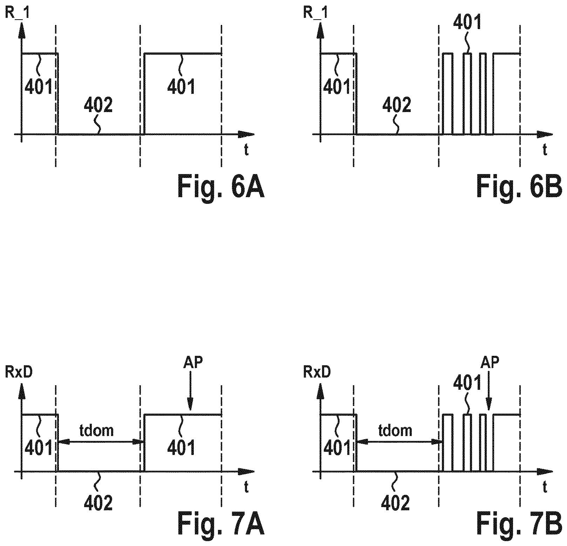

Bei dem Sendesignal TxD von Fig. 3A findet im Laufe der Zeit t bei drei aufeinanderfolgenden Bits ein Zustandswechsel von einem ersten Buszustand 401 zu einem zweiten Buszustand 402 und dann wieder zurück zu dem ersten Buszustand 401 statt. Der erste Buszustand 401 kann auch als Rezessivzustand oder hoher Pegel bezeichnet werden. Der zweite Buszustand 402 kann auch als Dominantzustand oder niedriger Pegel bezeichnet werden. In Folge des Sendesignals TxD von Fig. 3A stellt sich die Spannung V für die Signale CAN_H und CAN_L gemäß Fig. 4A ein, die Differenzspannung VDIFF = CAN_H - CAN_L gemäß Fig. 5A ein, ein Ausgangssignal R_1 des Empfängers 122 gemäß Fig. 6A ein, und ein Empfangssignal RxD gemäß Fig. 7A ein. Die Spannung V für die Signale CAN_H und CAN_L gemäß Fig. 4A entspricht im ersten Buszustand 401 oder rezessiven Zustand der Hälfte des Busvorspannungspotenzials der Busvorspannungseinheit 1223.

Im Vergleich dazu sind in den Fig. 3B bis Fig. 7B jeweils die zeitlichen Verläufe von Signalen bei einer Sende-/Empfangseinrichtung gemäß einer herkömmlichen Sende-/Empfangseinrichtung veranschaulicht, wie beispielsweise der Sende-/Empfangseinrichtung 13 der Teilnehmerstation 20.

Aus dem Vergleich der Signale von Fig. 4A und Fig. 4B ergibt sich sehr deutlich, dass die Sende-/Empfangseinrichtung 12 gemäß dem vorliegenden Ausführungsbeispiel bei demselben Sendesignal TxD ein deutlich schnelleres Einschwingen der Signale CAN_H und CAN_L nach dem Zustandswechsel von dem Zustand 401 auf den Zustand 402 bzw. von Dominant nach Rezessiv bewirkt. Ist die Schwellwertspannung des Empfängers 122 auf den üblichen Wert von 0,7 V eingestellt, wie in Fig. 5A und Fig. 5B veranschaulicht, erkennt der Empfänger 122 auch bei einem Zustandswechsel von dem Zustand 401 auf den Zustand 402 bzw. von Dominant nach Rezessiv keine angeblichen Zustandswechsel mehr von dem Zustand 402 auf den Zustand 401 bzw. von Rezessiv nach Dominant, wie auch in Fig. 6A dargestellt. Somit kann eine Abtastung des Empfangssignals RxD bei dem derzeit üblichen Abtastpunkt AP sicher zu dem gewünschten Ergebnis führen, wie in Fig. 7A dargestellt. Dies gilt, auch wenn sich die Länge der Bitzeit tdom des Zustands 401 bzw. eines dominanten Bits gegenüber einer herkömmlichen Sende-/Empfangseinrichtung oder der Sende-/Empfangseinrichtung 13 der Teilnehmerstation 20 etwas verlängert, wie aus dem Vergleich von Fig. 7A und Fig. 7B ersichtlich.

Somit hat die Sende-/Empfangseinrichtung 12 gemäß dem vorliegenden Ausführungsbeispiel eine geringere Schwingneigung als eine herkömmliche Sende-/Empfangseinrichtung bzw. die Sende-/Empfangseinrichtung 13.

Im Betrieb der Sende-/Empfangseinrichtung 12 von Fig. 2 wird ein Wechsel des Buszustands 401 nach 402 bzw. von Dominant nach Rezessiv durch den Zustandswechsel-Erfassungsblock 141 erkannt, wenn bei dem TxD-Signal ein Rezessiv-Zustand bzw. der Zustand 401 mindestens für die Zeit eines Bits beginnt, wie in Fig. 3A veranschaulicht. Infolgedessen wird die Schwingungsreduktionseinheit 15 angesteuert, wie nachfolgend beschrieben.

Gemäß Fig. 8 umfasst die Schwingungsreduktionseinheit 15 zwei PMOS-Hochvolt-Transistoren 151, 152, welche antiseriell angeordnet sind und zwischen die Busadern 41, 42 schaltbar sind. Hierfür ist der PMOS-Hochvolt-Transistor 151 mit seinem Drain-Anschluss an die Busader 41 für CAN-H angeschlossen. Der PMOS-Hochvolt-Transistor 152 ist mit seinem Drain-Anschluss an die Busader 42 für CAN-L angeschlossen. Die PMOS-Hochvolt-Transistoren 151, 152 sind gemäß der P-Substrat-Bulk-Technologie aufgebaut, welche die herkömmliche oder klassische Bauweise von PMOS-Hochvolt-Transistoren ist.

Zudem umfasst die Schwingungsreduktionseinheit 15 eine Zenerdiode 153, einen Widerstand 154, einen Hochvolt-Kaskoden-Transistor 155, der vorzugsweise eine Hochvolt-PMOS-Kaskode ist, eine Schaltung 156 mit dem Transistor 155, einem Stromspiegel 1561 und einer Parallelschaltung 1562 aus einem Widerstand und einer weiteren Zenerdiode, eine Verpolschutzdiode 157, und Hochvolt-Kaskoden-Transistoren 158, 159, 160, die jeweils vorzugsweise Hochvolt-NMOS-Kaskoden sind. Die Hochvolt-Kaskode 158 ist mit einem Schalter 1581 verbunden, der zu einer Einschaltstrom-Stromquelle I1 schaltbar ist. Die Hochvolt-Kaskode 159 ist mit einem Schalter 1591 verbunden, der zu einer Einschaltstrom-Stromquelle I2 schaltbar ist. Die Hochvolt-Kaskode 160 ist mit einer Stromquelle IKV verbunden, welche zur Erzeugung einer P-Kaskoden-Vorspannung für die Hochvolt-Kaskode 155 dient. Optional kann auch zwischen der Stromquelle IKV und dem Anschluss 129 ein Schalter vorgesehen sein, wie bei den Stromquellen I1 und I2, der zusammen mit den Schaltern 1581, 1591 schaltbar ist.

Die Zenerdiode 153 und der Widerstand 154 sind parallel geschaltet. Zudem ist die Parallelschaltung aus Zenerdiode 153 und Widerstand 154 zwischen die Gate-Anschlüsse der zwei PMOS-Hochvolt-Transistoren 151, 152 und die Source-Anschlüsse der zwei PMOS-Hochvolt-Transistoren 151, 152 geschaltet.

Die beiden PMOS-Transistoren 151, 152 werden während eines Schaltvorgangs von Dominant nach Rezessiv bzw. eines Schaltvorgangs von dem zweiten Buszustand 402 zu dem ersten Buszustand 401 von dem Zeitsteuerblock 142 eingeschaltet. Hierfür schaltet der Zeitsteuerblock 142 die Schalter 1581, 1591 von der geöffneten Stellung, die in Fig. 8 gezeigt ist, in ihre geschlossene Stellung. Dadurch ist die Hochvolt-Kaskode 158 über den Schalter 1581 mit der Einschaltstrom-Stromquelle I1 verbunden. Außerdem ist die Hochvolt-Kaskode 159 über den Schalter 1591 mit der Einschaltstrom-Stromquelle I2 verbunden.

Nach Erkennen von Rezessiv bzw. dem ersten Buszustand 401 schaltet der Zeitsteuerblock 142 die Schalter 1581, 1591 wieder aus bzw. wieder in die in Fig. 8 gezeigte geöffnete Stellung. Dadurch ist die Verbindung der Hochvolt-Kaskode 158 über den Schalter 1581 zu der Einschaltstrom-Stromquelle I1 unterbrochen. Außerdem ist die Verbindung der Hochvolt-Kaskode 159 über den Schalter 1591 zu der Einschaltstrom-Stromquelle I2 unterbrochen.

Die Zeitkonstante bestehend aus dem Widerstand 154
und einer HV-PMOS-Gatekapazität der Transistoren 151, 152 sorgt dabei für kontinuierliches Ausklingen des Kurzschlusses, der durch das Schalten der Schalter 1581, 1591 während eines Schaltvorgangs von Dominant nach Rezessiv bzw. eines Schaltvorgangs von dem zweiten Buszustand 402 zu dem ersten Buszustand 401 erzeugt wird. Diese Eigenschaft ist auch vorteilhaft dahingehend, dass eine Abstrahlung der Schwingungsreduktionseinheit 15 und damit auch der damit verbundenen Komponenten reduziert wird. Dadurch werden leitungsgebundene Emissionen reduziert.

Die Schaltung von Fig. 8 kann monolithisch an ein CAN-FD-Transceiver-Frontend verbunden werden, wie in Fig. 2 und Fig. 8 veranschaulicht. Es ist jedoch alternativ möglich, die Schaltung von Fig. 8 diskret auf einem Steuergerät aufzubauen. Das Steuergerät kann zumindest Teil einer Teilnehmerstation 10, 30 sein.

Für eine Reduktion oder Verringerung der Abstrahlung ist es auch vorteilhaft, die Einschaltströme I1, I2 gegen Masse mit einem Strom IB von Plus, genauer gesagt der Spannungsversorgung vom Anschluss 128, zu kompensieren. Der Strom IB kann auch als Balance-Strom bezeichnet werden.

Somit wird mit der Sende-/Empfangseinrichtung 12 ein Verfahren zur Reduzierung einer Schwingneigung beim Übergang zwischen unterschiedlichen Bitzuständen durchgeführt.

Bei dem beschriebenen Ausführungsbeispiel haben nur die Teilnehmerstationen 10, 30 die Funktionalität der Sende-/Empfangseinrichtung 12. Die Teilnehmerstationen 10, 30 sind vorzugsweise Teilnehmerstationen oder Knoten mit hoher Schwingneigung. Die hohe Schwingneigung der Teilnehmerstationen 10, 30 kann sich insbesondere durch deren Position im Bussystem 1, die Position der Terminationswiderstände 49, die Stub-Länge bzw. Stichleitungslänge zu den Teilnehmerstationen 10, 30, usw. ergeben.

Gemäß einer Modifikation des ersten Ausführungsbeispiels ist die zuvor beschriebene Funktionalität der Sende-/Empfangseinrichtung 12 und der Schwingungsreduktionseinheit 15 nur aktiv, wenn die Sende-/Empfangseinrichtung 12 selbst sendet bzw. als Sender agiert.

Gemäß einer weiteren Modifikation des ersten Ausführungsbeispiels kann die zuvor beschriebene Funktionalität der Sende-/Empfangseinrichtung 12 und der Schwingungsreduktionseinheit 15 nur beispielsweise in vorbestimmten Kommunikationsphasen aktiv sein, wie beispielsweise den Arbitrationsphasen. In Arbitrationsphasen wird bestimmt, welche der Teilnehmerstationen 10, 20, 30 derzeit die wichtigste Nachricht 45, 46, 47 senden möchte und daher als nächstes zumindest zeitweise einen exklusiven, kollisionsfreien Zugriff auf den Bus 40 bekommt.

Gemäß noch einer weiteren Modifikation des ersten Ausführungsbeispiels hat auch die Teilnehmerstation 20 anstelle einer Sende-/Empfangseinrichtung 13 eine Sende-/Empfangseinrichtung 12. In diesem Fall ist die zuvor beschriebene Funktionalität der Sende-/Empfangseinrichtung 12 für alle Teilnehmerstationen 10, 20, 30 des Bussystems aktiv, insbesondere je nach Bedarf.

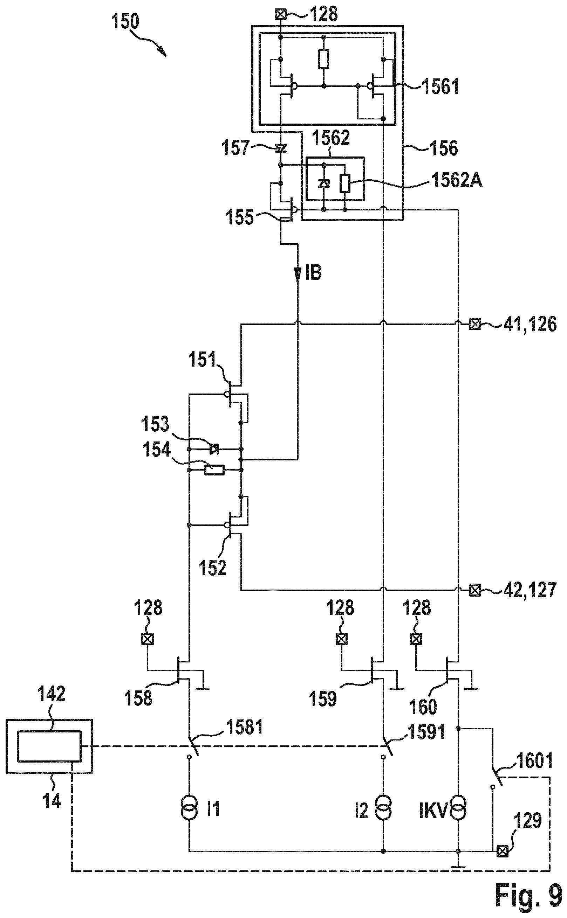

Fig. 9 zeigt eine Schwingungsreduktionseinheit 150 gemäß einem zweiten Ausführungsbeispiel. Das Bussystem 1 und die Sende-/Empfangseinrichtung 12 sind bis auf die nachfolgend beschriebenen Unterschiede auf die gleiche Weise aufgebaut, wie zuvor gemäß dem vorangehenden Ausführungsbeispiel oder seinen Modifikationen beschrieben.

Wie bei dem vorliegenden Ausführungsbeispiel, ist zusätzlich zu den Schaltungskomponenten, die in Bezug auf Fig. 8 beschrieben sind, ein Schalter 1601 vorgesehen. Der Schalter 1601 ist in Fig. 9 parallel zu der Stromquelle IKV geschaltet. Zudem ist die Schaltung 156 mit dem Stromspiegel 1561 derart modifiziert, dass die Verpolschutzdiode 157 zwischen dem Stromspiegel 1561 und dem Source-Anschluss der Hochvolt-Kaskode 155 vorgesehen ist. Hierbei ist die Anode der Verpolschutzdiode 157 mit dem Stromspiegel 1561 verbunden. Die Kathode der Verpolschutzdiode 157 ist mit dem Source-Anschluss und dem Gate-Anschluss der Hochvolt-Kaskode 155 verbunden, die vorzugsweise eine Hochvolt-PMOS-Kaskode ist. Außerdem ist die Parallelschaltung 1562 aus einem Widerstand 1562A und der weiteren Zenerdiode zwischen den Source-Anschluss und den Gate-Anschluss der Hochvolt-Kaskode 155 geschaltet. Der Widerstand 1562A ist sehr hochohmig ausgelegt. Das heißt, dass der Widerstandswert des Widerstands 1562A zwischen ca. 3 MΩ bis ca. 5 MΩ liegt.

Im Betrieb der Schaltung von Fig. 9 wird der Schalter 1601 von dem Zeitsteuerblock 142 von der geöffneten Stellung, die in Fig. 9 gezeigt ist, in seine geschlossene Stellung geschaltet, wenn in dem Sendesignal TxD ein dominanter Zustand 402 vorliegt bzw. gesendet wird. Als Folge davon wird die Stromquelle IKV kurzgeschlossen. Wechselt das Sendesignal TxD von dem dominanten Zustand 402 zu dem rezessiven Zustand 401, steuert der Zeitsteuerblock 142 den geschlossenen Schalter 1601 wieder in die geöffnete Stellung gemäß Fig. 9. Dadurch wird die P-Kaskoden- Vorspannung für die Hochvolt-Kaskode 155, die von der Stromquelle IKV erzeugt wird, jeweils aus- oder eingeschaltet.

Auch auf diese Weise kann mit der Sende-/Empfangseinrichtung 12 und der Schwingungsreduktionseinheit 150 ein Verfahren zur Reduzierung einer Schwingneigung beim Übergang zwischen unterschiedlichen Bitzuständen durchgeführt werden.

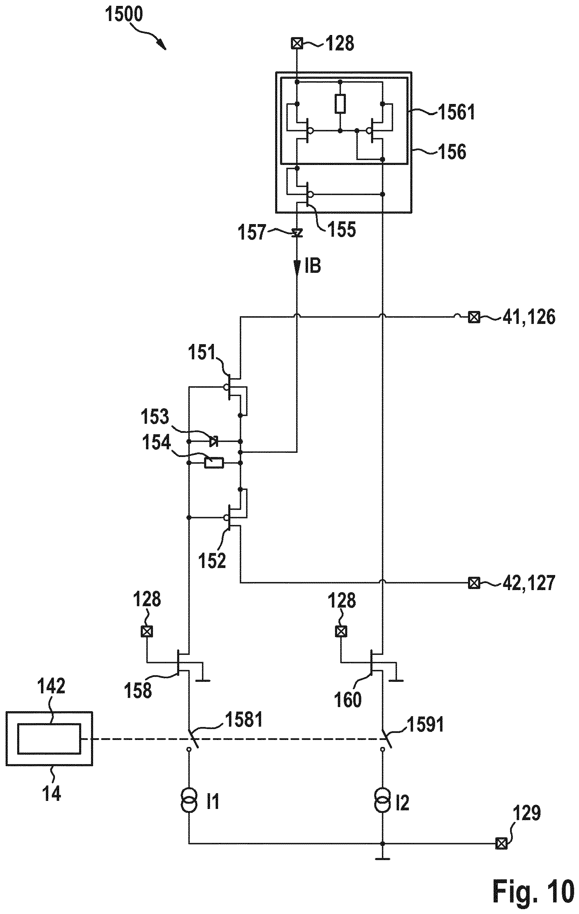

Fig. 10 zeigt eine Schwingungsreduktionseinheit 1500 gemäß einem dritten Ausführungsbeispiel. Das Bussystem 1 und die Sende-/Empfangseinrichtung 12 sind bis auf die nachfolgend beschriebenen Unterschiede auf die gleiche Weise aufgebaut, wie zuvor gemäß dem ersten Ausführungsbeispiel oder seinen Modifikationen beschrieben.

Im Unterschied zu den vorangehenden Ausführungsbeispielen, bei welchen die PMOS-Hochvolt-Transistoren 151, 152 gemäß der P-Substrat-Bulk-Technologie, der herkömmlichen Bauweise von PMOS-Hochvolt-Transistoren aufgebaut sind, sind die PMOS-Hochvolt-Transistoren 151, 152 bei der Schwingungsreduktionseinheit 1500 gemäß einer SOI-Technologie aufgebaut (SOI = Silicon On Insulator = Silizium auf Isolator). In diesem Fall ist die Verpolschutzdiode 157, wie in Fig. 9, hinter die HV-Kaskode 155 geschaltet. Dadurch wird bei der Schwingungsreduktionseinheit 150 auch der Strom IKV nicht benötigt, der gemäß den vorangehenden Ausführungsbeispielen zur Erzeugung der P-Kaskode Vorspannung wegen der P-Substrat-Bulk-Technologie erforderlich ist.

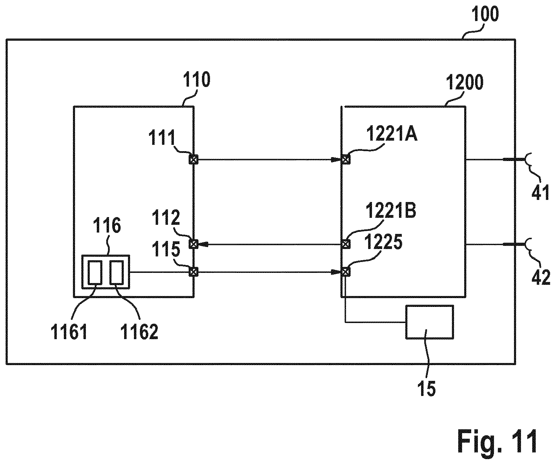

Fig. 11 zeigt den grundlegenden Aufbau einer Teilnehmerstation 100 mit einer Kommunikationssteuereinrichtung 110 und einer Sende-/Empfangseinrichtung 120 gemäß einem vierten Ausführungsbeispiel, an die als Beispiel eine Schwingungsreduktionseinheit 15 angeschlossen ist, wie bei dem ersten Ausführungsbeispiel beschrieben. Das Bussystem 1 und die Teilnehmerstation 100 sind bis auf die nachfolgend beschriebenen Unterschiede auf die gleiche Weise aufgebaut, wie zuvor gemäß dem ersten Ausführungsbeispiel oder seinen Modifikationen für das Bussystem 1 und die Teilnehmerstation 10 beschrieben.

Die Kommunikationssteuereinrichtung 110 ist bis auf die nachfolgend beschriebenen Unterschiede aufgebaut wie die Kommunikationssteuereinrichtung 11 des ersten Ausführungsbeispiels. Die Sende-/Empfangseinrichtung 120 ist bis auf die nachfolgend beschriebenen Unterschiede aufgebaut wie die Sende-/Empfangseinrichtung 12 des ersten Ausführungsbeispiels.

Die Kommunikationssteuereinrichtung 110 hat neben den Anschlüssen 111, 112 für die Signale TxD, RxD einen zusätzlichen Anschluss 115 für ein Steuersignal RS_Control_Out.

Die Sende-/Empfangseinrichtung 120 hat einen Anschluss 1221A zum Empfang des Sendesignals TxD von dem Anschluss 111 der Kommunikationssteuereinrichtung 110, wie bereits zuvor in Bezug auf das erste Ausführungsbeispiel allgemeiner beschrieben. Außerdem hat die Sende-/Empfangseinrichtung 120 einen Anschluss 1221B zum Senden des Empfangssignals RxD an den Anschluss 112 der Kommunikationssteuereinrichtung 110, wie bereits zuvor in Bezug auf das erste Ausführungsbeispiel allgemeiner beschrieben. Zusätzlich dazu weist die Sende-/Empfangseinrichtung 120 einen Anschluss 1225 auf, an welchem das Steuersignal RS_Control_Out als Steuersignal RS_Control_ln empfangen wird.

Zur Erzeugung des Steuersignals RS_Control_Out für den Anschluss 115 hat die Kommunikationssteuereinrichtung 110 einen Steuerblock 116. Der Steuerblock 116 überwacht den Busverkehr auf den Busadern 41, 42, indem der Steuerblock 116 das als erste Informationen 1161 gespeicherte Sendesignal TxD und das am Anschluss 112 empfangene, und bei Bedarf zwischengespeicherte, Empfangssignal RxD miteinander vergleicht. Treten im rezessiven Buszustand, also dem ersten Buszustand 401, Abweichungen zwischen den beiden Signalen TxD, RxD auf, wie beispielsweise Zustandswechsel im Empfangssignal RxD, die nicht in dem Sendesignal TxD enthalten waren, so können daraus Rückschlüsse über das Netzwerk bzw. den Bus 40 und die Signalintegrität gezogen werden.

Des Weiteren liegen in dem Steuerblock 116 der Kommunikationssteuereinrichtung 110 zweite Informationen 1162 vor, wie Bitrate, Ausbreitungsverzögerung (Propagation-Delay) für beide Schaltvorgänge, also einem Zustandswechsel von dem ersten Buszustand 401 zu dem zweiten Buszustand 402. Die Informationen 1162 können alternativ in einem nicht dargestellten weiteren Block, insbesondere Speicher, vorgehalten werden.

Dabei kann der RxD-Ausgang am Anschluss 1221B anstelle eines Digitalsignals das Ausgangssignal eines Analog-Digital-Wandlers sein, welcher die Differenzspannung des Empfangssignals RxD darstellt.

Unter Berücksichtigung dieser Informationen 1161, 1162 erzeugt der Steuerblock 116 das Steuersignal RS_Control_Out, welches von dem Anschluss 115 ausgegeben wird, an dem Anschluss 1225 der Sende-/Empfangseinrichtung 120 empfangen wird und an die Schwingungsreduktionseinheit 15 weitergegeben wird. Dementsprechend kann bei der Sende-/Empfangseinrichtung 120 der Block 14 der vorangehenden Ausführungsbeispiele entfallen.

Auf diese Weise wird die Steuerung der Reduktion der Schwingneigung (Ringing Suppression) hier nicht von der Sende-/Empfangseinrichtung 120 gesteuert, sondern von der Kommunikationssteuereinrichtung 110. Hierbei kann die Kommunikationssteuereinrichtung 110, genauer gesagt ihr Steuerblock 116, die Schwingungsreduktionseinheit 15 an die speziellen Eigenschaften der Teilnehmerstation 100 und des Netzwerks bzw. des Busses 40 anpassen. In anderen Worten, die Kommunikationssteuereinrichtung 110, genauer gesagt ihr Steuerblock 116, kann die Schwingungsreduktionseinheit 15 Knoten- und Netzwerk-Sensitiv einstellen. Der Steuerblock 116 bietet damit eine Lernfunktion für die Teilnehmerstation 100.

Damit kann ebenso eine deutliche Reduktion der Schwingneigung bei dem Zustandswechsel vom zweiten Buszustand 402 zum ersten Buszustand 401 realisiert werden. Zudem kann dadurch ein deutlicher Gewinn für das Bussystem 1 als Gesamtsystem erreicht werden.

Alle zuvor beschriebenen Ausgestaltungen der Schwingungsreduktionseinheiten 15, 150, 1500 der Sende-/Empfangseinrichtungen 12, 120, der Teilnehmerstationen 10, 20, 30, 100 des Bussystems 1 und des darin ausgeführten Verfahrens gemäß den Ausführungsbeispielen und deren Modifikationen können einzeln oder in allen möglichen Kombinationen Verwendung finden. Zusätzlich sind insbesondere folgende Modifikationen denkbar.

Das zuvor beschriebene Bussystem 1 gemäß den Ausführungsbeispielen und/oder deren Modifikationen ist anhand eines auf dem CAN-Protokoll basierenden Bussystems beschrieben. Das Bussystem 1 gemäß den Ausführungsbeispielen und/oder deren Modifikationen kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30, 100 auf den Bus 40 oder einen gemeinsamen Kanal des Busses 40 gewährleistet ist.

Das Bussystem 1 gemäß den Ausführungsbeispielen und/oder deren Modifikationen ist insbesondere ein CAN-Netzwerk oder ein CAN-HS-Netzwerk oder ein CAN FD-Netzwerk oder ein FlexRay-Netzwerk. Das Bussystem 1 kann jedoch auch ein anderes serielles Kommunikationssetzwerk sein.

Insbesondere kann die Schwingungsreduktionseinheit 15, 150 bei LVDS (Low Voltage Differential Signaling) eingesetzt werden, der ein Schnittstellen-Standard für eine Hochgeschwindigkeits-Datenübertragung ist, bei welcher ein Sender und ein Empfänger über eine Datenübertragungsstrecke miteinander verbunden sind. LVDS ist standardisiert nach ANSI/TIA/EIA-644-1995.

Die Anzahl und Anordnung der Teilnehmerstationen 10, 20, 30, 100 in dem Bussystem 1 gemäß den Ausführungsbeispielen und/oder deren Modifikationen ist beliebig. Insbesondere können auch nur Teilnehmerstationen 10 oder Teilnehmerstationen 30 oder Teilnehmerstationen 100 in den Bussystemen 1 der Ausführungsbeispiele und/oder deren Modifikationen vorhanden sein.

Die Funktionalität der zuvor beschriebenen Ausführungsbeispiele und/oder deren Modifikationen lässt sich jeweils in einem Transceiver bzw. einer Sende-/Empfangseinrichtung 12 bzw. Transceiver oder einem CAN-Transceiver oder einem Transceiver-Chipsatz oder einem CAN-Transceiver-Chipsatz, usw. umsetzen. Zusätzlich oder alternativ kann es in existierende Produkte integriert werden. Insbesondere ist es möglich, dass die betrachtete Funktionalität entweder im Transceiver als separater elektronischer Baustein (Chip) realisiert oder in einer integrierten Gesamtlösung, bei welchem nur ein elektronischer Baustein (Chip) vorhanden ist, eingebettet ist.

## Patentansprüche

1. Schwingungsreduktionseinheit (15; 150; 1500) für ein Bussystem (1), mit
zwei Transistoren (151, 152), die antiseriell zwischen einer ersten Busader (41) eines Busses (40) des Bussystems (1) und einer zweiter Busader (41) des Busses (40) angeordnet sind, bei welchem Bussystem (1) zumindest zeitweise ein exklusiver, kollisionsfreier Zugriff einer Teilnehmerstation (10, 20, 30) auf den Bus (40) des Bussystems (1) gewährleistet ist,
wobei die Transistoren (151, 152) PMOS-Hochvolt-Kaskoden sind,
einem Widerstand (154),
einem ersten Hochvolt-Kaskoden-Transistor (158), der mit einem ersten Schalter (1581) verbunden ist, der zu einer Einschaltstrom-Stromquelle (I1) schaltbar ist,
einem zweiten Hochvolt-Kaskoden-Transistor (159), der mit einem zweiten Schalter (1591) verbunden ist, der zu einer zweiten Einschaltstrom-Stromquelle (I2) schaltbar ist,
einem Zeitsteuerblock (142) zum Schalten der zwei Transistoren (151, 152),
wobei der Zeitsteuerblock (142) ausgestaltet ist, die zwei Transistoren (151, 152) einzuschalten, während ein Signal (CAN_H, CAN_L) auf der ersten und/oder zweiten Busader (41, 42) und/oder ein Sendesignal (TxD), aus dem die Signale auf der ersten und/oder zweiten Busader (41, 42) erzeugt werden, von einem dominanten Zustand (402) zu einem rezessiven Zustand (401) wechselt, und
wobei der Zeitsteuerblock (142) ausgestaltet ist, die zwei Transistoren (151, 152) auszuschalten, wenn das Signal (CAN_H, CAN_L) auf der ersten und/oder zweiten Busader (41, 42) und/oder das Sendesignal (TxD), in den rezessiven Zustand (401) geschaltet sind/ist,
wobei, die Zeitkonstante bestehend aus dem Widerstand (154) und einer HV-PMOS-Gatekapazität der Transistoren (151, 152) für ein kontinuierliches Ausklingen des Kurzschlusses sorgt, der durch das Schalten des ersten und zweiten Schalters (1581, 1591) während des Schaltvorgangs von dem dominanten Buszustand (402) zu dem rezessiven Buszustand (401) erzeugt wird.

2. Schwingungsreduktionseinheit (15; 150; 1500) nach Anspruch 1, wobei die Schwingungsreduktionseinheit (15; 150; 1500) ausgestaltet ist, einen Einschaltstrom (I1; I2) gegen Masse beim Einschalten der Transistoren (151, 152) mit einem Strom (IB) von einem Anschluss (128) für eine Spannungsversorgung zu kompensieren.

3. Schwingungsreduktionseinheit (15; 150; 1500) nach einem der vorangehenden Ansprüche, zudem mit einem weiteren Transistor (155), dessen Drain-Anschluss an Source-Anschlüsse der zwei zwischen den Busadern (41, 42) antiseriell angeschlossenen Transistoren (151, 152) angeschlossen ist.

4. Schwingungsreduktionseinheit (15; 150; 1500) nach Anspruch 3,
zudem mit einer Stromquelle (IKV) zur Erzeugung einer Vorspannung für den weiteren Transistor (155),
wobei der weitere Transistor (155) gemäß der P-Substrat-Bulk-Technologie aufgebaut ist.

5. Schwingungsreduktionseinheit (15; 150; 1500) nach Anspruch 4, wobei der weitere Transistor (155) gemäß der SOI-Technologie aufgebaut ist.

6. Teilnehmerstation (10; 30; 100) für ein Bussystem (1), mit
einer Kommunikationssteuereinrichtung (11; 110) zum Steuern einer Kommunikation der Teilnehmerstation (10; 30; 100) mit mindestens einer weiteren Teilnehmerstation (10; 20; 30; 100) des Bussystems (1), und
einer Sende-/Empfangseinrichtung (12; 120) zum Senden von Nachrichten (45; 47) auf einen Bus (40) des Bussystems (1) und zum Empfangen von Nachrichten (45; 47) von dem Bus (40), und
einer Schwingungsreduktionseinheit (15; 150; 1500) nach einem der vorangehenden Ansprüche.

7. Teilnehmerstation (10; 30; 100) nach Anspruch 6,
wobei die Kommunikationssteuereinrichtung (110) oder die Sende-/Empfangseinrichtung (12; 120) einen Block (116; 141) aufweist, welcher ausgestaltet ist, einen Zustandswechsel eines vom Bus (40) empfangenen Signals von dem dominanten Buszustand (402) zu dem rezessiven Buszustand (401) zu erfassen,
wobei die Schwingungsreduktionseinheit (15; 150; 1500) ausgestaltet ist, die zwei antiseriell zwischen den Busadern (41, 42) angeschlossenen Transistoren (151, 152) in Abhängigkeit von dem Erfassungsergebnis des Blocks (116; 141) ein- oder auszuschalten.

8. Teilnehmerstation (10; 30; 100) nach einem der Ansprüche 6 bis 7,
wobei die Schwingungsreduktionseinheit (15; 150; 1500) derart ausgestaltet ist, dass die Schwingungsreduktionseinheit (15; 150) nur aktiviert ist, wenn die Sende-/Emptangseinrichtung (12; 120) eine Nachricht (45; 47) auf den Bus (40) sendet.

9. **Bussystem** (1), mit
einem bus (40), und
mindestens zwei Teilnehmerstationen (10; 30; 100), welche über den Bus (40) derart miteinander verbunden sind, dass sie miteinander kommunizieren können und von denen mindestens eine Teilnehmerstation (10; 30; 100) eine Teilnehmerstation (10; 30; 100) nach einem der Ansprüche 6 bis 8 ist.

## Claims

1. Oscillation reduction unit (15; 150; 1500) for a bus system (1), having
two transistors (151, 152) which are arranged in antiseries between a first bus wire (41) of a bus (40) of the bus system (1) and a second bus wire (41) of the bus (40), which bus system (1) at least intermittently ensures exclusive collision-free access by a subscriber station (10, 20, 30) to the bus (40) of the bus system, wherein the transistors (151, 152) are PMOS high-voltage cascodes,
a resistor (154),
a first high-voltage cascode transistor (158), connected to a first switch (1581), which is switchable to an inrush-current current source (I1),
a second high-voltage cascode transistor (159), connected to a second switch (1591), which is switchable to a second inrush-current current source (12),
a timing control block (142) for switching the two transistors (151, 152),
wherein the timing control block (142) is configured to switch on the two transistors (151, 152) while a signal (CAN_H, CAN_L) on the first and/or second bus wire (41, 42) and/or a transmission signal (TxD), from which the signals on the first and/or second bus wire (41, 42) are generated, is changing from a dominant state (402) to a recessive state (401), and
wherein the timing control block (142) is configured to switch off the two transistors (151, 152) when the signal (CAN_H, CAN_L) on the first and/or second bus wire (41, 42) and/or the transmission signal (TxD) have/has been switched to the recessive state (401),
wherein the time constant consisting of the resistor (154) and of an HV PMOS gate capacitance of the transistors (151, 152) ensures a continuous decay of the short circuit that is created by switching the first and second switches (1581, 1591) during the process of switching from the dominant bus state (402) to the recessive bus state (401).

2. Oscillation reduction unit (15; 150; 1500) according to Claim 1, wherein the oscillation reduction unit (15; 150; 1500) is configured to compensate for an inrush current (I1; 12) to ground when switching on the transistors (151, 152) with a current (IB) from a connection (128) for a voltage supply.

3. Oscillation reduction unit (15; 150; 1500) according to one of the preceding claims, further having an additional transistor (155), the drain connection of which is connected to source connections of the two transistors (151, 152) that are connected in antiseries between the bus wires (41, 42).

4. Oscillation reduction unit (15; 150; 1500) according to Claim 3,
further having a current source (IKV) for generating a bias voltage for the additional transistor (155), wherein the additional transistor (155) is constructed in accordance with P-type bulk substrate technology.

5. Oscillation reduction unit (15; 150; 1500) according to Claim 4, wherein the additional transistor (155) is constructed in accordance with SOI technology.

6. Subscriber station (10; 30; 100) for a bus system (1), having
a communication control device (11; 110) for controlling a communication of the subscriber station (10; 30; 100) with at least one additional subscriber station (10; 20; 30; 100) of the bus system (1), and
a transmission/reception device (12; 120) for transmitting messages (45; 47) to a bus (40) of the bus system (1) and for receiving messages (45; 47) from the bus (40), and
an oscillation reduction unit (15; 150; 1500) according to one of the preceding claims.

7. Subscriber station (10; 30; 100) according to Claim 6,
wherein the communication control device (110) or the transmission/reception device (12; 120) has a block (116; 141) that is configured to detect a change of state of a signal received from the bus (40) from the dominant bus state (402) to the recessive bus state (401),
wherein the oscillation reduction unit (15; 150; 1500) is configured to switch the two transistors (151, 152) connected in antiseries between the bus wires (41, 42) on or off depending on the detection result of the block (116; 141).

8. Subscriber station (10; 30; 100) according to either of Claims 6 and 7,
wherein the oscillation reduction unit (15; 150; 1500) is configured in such a way that the oscillation reduction unit (15; 150) is activated only when the transmission/reception device (12; 120) transmits a message (45; 47) to the bus (40).

9. Bus system (1), having
a bus (40), and
at least two subscriber stations (10; 30; 100) which are connected to one another via the bus (40) in such a way that they can communicate with one another and of which at least one subscriber station (10; 30; 100) is a subscriber station (10; 30; 100) according to one of Claims 6 to 8.

## Revendications

1. Unité de réduction d'oscillation (15 ; 150 ; 1500) pour un système de bus (1), comprenant
deux transistors (151, 152) qui sont disposés selon un montage anti-série entre un premier fil de bus (41) d'un bus (40) du système de bus (1) et un deuxième fil de bus (41) du bus (40), système de bus (1) dans lequel un accès exclusif, sans collision, d'un poste d'utilisateur (10, 20, 30) au bus (40) du système de bus (1) est garanti au moins temporairement,
les transistors (151, 152) étant des cascodes haute tension à PMOS,
une résistance (154),
un premier transistor cascode haute tension (158) qui est relié à un premier commutateur (1581) qui peut être commuté sur une source de courant de courant de fermeture (I1),
un deuxième transistor cascode haute tension (159) qui est relié à un deuxième commutateur (1591) qui peut être commuté sur une deuxième source de courant de courant de fermeture (I2),
un bloc de synchronisation (142) pour commuter les deux transistors (151, 152),
le bloc de synchronisation (142) étant conçu pour brancher les deux transistors (151, 152) pendant qu'un signal (CAN_H, CAN_L) sur le premier et/ou le deuxième fil de bus (41, 42) et/ou un signal d'émission (TxD) à partir duquel les signaux du premier et/ou du deuxième fil de bus (41, 42) sont générés passe (nt) d'un état dominant (402) à un état récessif (401), et
le bloc de synchronisation (142) étant conçu pour débrancher les deux transistors (151, 152) si le signal (CAN_H, CAN_L) sur le premier et/ou le deuxième fil de bus (41, 42) et/ou le signal d'émission (TxD) est/sont commuté(s) sur l'état récessif (401),
la constante de temps composée de la résistance (154) et d'une capacité de grille de PMOS haute tension des transistors (151, 152) assurant un évanouissement continu du court-circuit qui est généré par la commutation du premier et du deuxième commutateur (1581, 1591) pendant l'opération de commutation de l'état de bus dominant (402) à l'état de bus récessif (401) .

2. Unité de réduction d'oscillation (15 ; 150 ; 1500) selon la revendication 1, l'unité de réduction d'oscillation (15; 150; 1500) étant conçue pour compenser un courant de fermeture (I1; I2) par rapport à la masse lorsque les transistors (151, 152) sont branchés avec un courant (IB) provenant d'une borne (128) pour une alimentation en tension.

3. Unité de réduction d'oscillation (15 ; 150 ; 1500) selon l'une quelconque des revendications précédentes, comprenant en outre un autre transistor (155) dont la borne de drain est connectée à des bornes de source des deux transistors (151, 152) connectés selon un montage anti-série entre les fils de bus (41, 42).

4. Unité de réduction d'oscillation (15 ; 150 ; 1500) selon la revendication 3,
comprenant en outre une source de courant (IKV) pour générer une tension de polarisation pour l'autre transistor (155),
l'autre transistor (155) étant réalisé selon la technologie de substrat massif P.

5. Unité de réduction d'oscillation (15 ; 150 ; 1500) selon la revendication 4, dans laquelle l'autre transistor (155) est réalisé selon la technologie SOI.

6. Poste d'utilisateur (10 ; 30 ; 100) pour un système de bus (1), comprenant
un dispositif de commande de communication (11 ; 110) pour commander une communication du poste d'utilisateur (10; 30; 100) avec au moins un autre poste d'utilisateur (10 ; 20 ; 30 ; 100) du système de bus (1), et
un dispositif d'émission/réception (12 ; 120) pour envoyer des messages (45; 47) sur un bus (40) du système de bus (1) et pour recevoir des messages (45 ; 47) du bus (40), et
une unité de réduction d'oscillation (15 ; 150 ; 1500) selon l'une quelconque des revendications précédentes.

7. Poste d'utilisateur (10 ; 30 ; 100) selon la revendication 6,
le dispositif de commande de communication (110) ou le dispositif d'émission/réception (12; 120) présentant un bloc (116; 141) qui est conçu pour détecter un changement d'état d'un signal reçu du bus (40) de l'état de bus dominant (402) à l'état de bus récessif (401),
l'unité de réduction d'oscillation (15; 150; 1500) étant conçue pour brancher ou débrancher les deux transistors (151, 152) connectés selon un montage anti-série entre les fils de bus (41, 42) en fonction du résultat de détection du bloc (116 ; 141).

8. Poste d'utilisateur (10; 30; 100) selon l'une quelconque des revendications 6 à 7,
l'unité de réduction d'oscillation (15; 150; 1500) étant conçue de telle sorte que l'unité de réduction d'oscillation (15 ; 150) n'est activée que si le dispositif d'émission/réception (12; 120) envoie un message (45 ; 47) sur le bus (40).

9. Système de bus (1), comprenant un bus (40) et au moins deux postes d'utilisateur (10; 30; 100) qui sont reliés l'un à l'autre par l'intermédiaire du bus (40) de telle sorte qu'ils peuvent communiquer l'un avec l'autre et dont au moins un poste d'utilisateur (10 ; 30 ; 100) est un poste d'utilisateur (10 ; 30 ; 100) selon l'une quelconque des revendications 6 à 8.
